## Europäisches Patentamt

## European Patent Office

## Office européen des brevets

(11) Numéro de publication: **0 145 531**
**B1**

(12) # FASCICULE DE BREVET EUROPÉEN

(45) Date de publication du fascicule du brevet:
25.11.87

(51) Int. Cl.⁴: **E 02 B 3/22**

(21) Numéro de dépôt: **84402126.1**

(22) Date de dépôt: **23.10.84**

(54) **Perfectionnements apportes aux moyens de protection de structures de support ou analogues, contre les chocs.**

(30) Priorité: **28.10.83 FR 8317321**

(43) Date de publication de la demande:
**19.06.85 Bulletin 85/25**

(45) Mention de la délivrance du brevet:
**25.11.87 Bulletin 87/48**

(84) Etats contractants désignés:
**GB IT NL**

(56) Documents cité:
**DE-A-2 526 771**
**FR-A-1 570 438**
**FR-A-2 114 860**
**US-A-3 937 170**
**US-A-3 950 953**
**US-A-4 227 832**

(73) Titulaire: **HUTCHINSON S.A., 2 rue Balzac, F-75008 Paris (FR)**

(72) Inventeur: **Korbuly, Gergely, 30 avenue Guy de Maupassant, F-78400 Chatou (FR)**

(74) Mandataire: **Ores, Irène, CABINET ORES 6, Avenue de Messine, F-75008 Paris (FR)**

LIBER, STOCKHOLM 1987

## Description

La présente invention est relative à des perfectionnements aux moyens de protection de structures de support ou analogues, contre les chocs, et notamment aux dispositifs de fixation de ces moyens de protection aux structures qu'ils sont destinés à protéger, et plus particulièrement encore aux dispositifs de fixation de ce qu'il est convenu d'appeler des "défenses d'accostage" de pylônes d'installations "off-shore" ou au sol telles que plateformes, docks, risers, barges de forage, pylônes, quais, etc... Si, dans ce qui va suivre, l'invention est décrite de façon plus spécifique en relation avec des défenses d'installations du type qui vient d'être mentionné, il va de soi qu'elle n'est pas limitée à de telles applications et qu'elle s'étend à la protection de toutes installations fixes ou flottantes sensibles aux chocs et/ou au milieu corrosif dans lequel elles sont appelées à fonctionner.

Les "défenses d'accostage" plus particulièrement destinées aux ouvrages off-shore, connues dans l'Art antérieur sont généralement constituées par des pièces en caoutchouc à profil en Δ, en D ou en M, fixées sur une platine qui est elle-même fixée par boulonnage sur une autre platine qui est solidaire de la structure à protéger, notamment lorsqu'il s'agit d'une structure non plane, et, en particulier, cylindrique, en milieu marin, les systèmes métalliques de solidarisation des pièces de protection en caoutchouc avec la structure à protéger subissent une corrosion intensive, notamment dans les "splash zones" en sorte que les boulons de fixation tiennent très mal et doivent être fréquemment remplacés, ce qui nécessite un travail très long de mise en place.

D'autre part, l'adaptation de telles défenses sur une structure tubulaire présente de grandes difficultés en raison de la courbure de la structure à protéger, en sorte que l'interposition d'une platine entre la structure et la défense est obligatoire. Toutefois, les efforts auxquels sont soumises les défenses sont transmis de façon très inégale aux structures à protéger, en raison des modalités de fixation des platines auxdites structures, qui impliquent des goussets et donc des zones où les structures à protéger sont soumises à des contraintes particulièrement importantes, qui leur sont préjudiciables.

Il a également été proposé de pourvoir les structures de support à protéger, de défenses gonflables, constituées par un coussin fixé à la structure, par exemple tubulaire, à protéger, par l'intermédiaire d'une platine ou de chaînes ou d'autres systèmes de câbles. Comme l'enveloppe de ces coussins est fragile, elle doit être protégée par un bouclier, ce qui complique considérablement la conception et le montage de ce type de défense; de plus, s'agissant de coussins gonflables, ces défenses doivent être maintenues sous une pression constante uniforme, d'où la nécessité de contrôler leur pression de façon permanente.

L'on connaît en outre des systèmes de défense à trois composants qui sont fixés sur la structure tubulaire à protéger par l'intermédiaire d'un collier et qui comprennent un composant coulissant de façon télescopique, directement lié au collier, et un deuxième composant disposé au-dessus du premier et fixé à la structure à protéger par l'intermédiaire d'une plaque soudée ou clampée, ces deux composants étant reliés l'un à l'autre par un tube vertical sur lequel sont enfilés des anneaux, excentriques par exemple, qui encaissent les chocs par déformation.

Tous ces systèmes de protection ont pour inconvénient commun de nécessiter des moyen; de fixation aux structures à protéger, qui sont complexes, difficiles à mettre en place et relativement fragiles.

Il existe également le Brevet FR-2 114 860 qui décrit un dispositif de protection d'une structure donnée contre les chocs, comprenant:
- un élément amortisseur de chocs en caoutchouc, ayant un profil approprié,
- une armature galbée avec laquelle l'élément amortisseur est solidarisé par "vulcanisation',
- des moyens de fixation du dispositif de protection à la structure à protéger.
Toutefois:
- l'armature galbée est divisée, ce qui réduit sensiblement sa coopération avec l'élément amortisseur, et
- les moyens de fixation sont fixes (soudure), ce qui rend long et onéreux le remplacement du dispositif de protection lorsque celui-ci devient excessivement usé.

La présente invention s'est en conséquence donné pour but de pourvoir à des moyens de protection de structures de support ou analogues, contre les chocs, qui répondent mieux aux nécessités de la pratique que les moyens de protection visant au même but précédemment proposés, notamment en ce que leur montage et leur fixation sur des structures, notamment tubulaires, sont conçus de telle manière que l'on dispose d'une fixation efficace, relativement souple et robuste, ne comportant pas de pièces sujettes à corrosion et/ou à usure prématurées, et assurant une répartition uniforme des efforts sur la structure à protéger, c'est-à-dire ne créant pas de zones de fragilité dans cette dernière.

La présente invention a pour objet un moyen de protection, du type des défenses d'accostage, pour des structures galbées de support ou analogues contre les chocs appliqués à ces dernières, comprenant en combinaison une armature galbée s'adaptant à la courbure de la structure à protéger, un élément amortisseur en caoutchouc à profil approprié propre à absorber les chocs et adhérisé à ladite armature, et des moyens de fixation à la structure à protéger, lequel moyen de protection est caractérisé en ce que:
- ladite armature galbée est continue, de façon à permettre, par coopération avec ledit élément amortisseur, une répartition uniforme des chocs sur la structure à protéger,

- les moyens de fixation sont détachables, de façon à permettre un remplacement facile et rapide des moyens de protection lorsque l'élément amortisseur devient excessivement usé,

lesquels moyens de fixation détachables comprennent:

· des premiers et des deuxièmes membres fixés à ladite structure à protéger et à ladite armature, respectivement, et

· des moyens d'interconnexion entre lesdits premiers et deuxièmes membres permettant à ces derniers de coopérer entre eux comme moyens de fixation, à savoir de bloquer ladite armature en position par rapport à ladite structure à protéger.

Selon un mode de réalisation avantageux desdits moyens de fixation, lesdits premiers et deuxièmes membres comprennent des premiers et des deuxièmes tubes alignés, dont les premiers tubes sont reliés à la structure à protéger, tandis que les deuxièmes tubes sont reliés à l'armature, et en ce que lesdits moyens d'interconnexion consistent en un axe de blocage disposé à l'intérieur desdits premiers et deuxièmes tubes alignés.

Selon un autre mode de réalisation avantageux desdits moyens de fixation, lesdits premiers membres comprennent au moins une portion de tube fixée à la structure à protéger, tandis que lesdits deuxièmes membres comprennent au moins un demi-rond fixé à l'armature, et en ce que lesdits moyens d'interconnexion sont constitués par ce même demi-rond qui est disposé à l'intérieur de ladite portion de tube pour bloquer ladite armature en position sur ladite structure à protéger.

Selon un autre mode de réalisation avantageux desdits moyens de fixation, lesdits premiers membres comprennent une pluralité d'oreilles verticales percées solidaires de ladite structure à protéger, tandis que lesdits deuxièmes membres comprennent une pluralité d'orifices ménagés dans ladite armature et dans lesquels lesdites oreilles sont destinées à être positionnées, et en ce que lesdits moyens d'interconnexion comprennent une pluralité de rivets ou goupilles ou analogues qui sont disposés dans lesdites oreilles percées et sont destinés à bloquer ladite armature en position sur ladite structure à protéger.

Selon un autre mode de réalisation avantageux desdits moyens de fixation, lesdits premiers et deuxièmes membres comprennent des premières et des deuxièmes oreilles percées juxtaposées deux à deux, dont les premières oreilles sont fixées à ladite structure à protéger, tandis que les deuxièmes oreilles sont fixées à ladite armature, et en ce que lesdits moyens d'interconnexion consistent en une pluralité d'axes de blocage, dont chacun est disposé dans chaque paire d'oreilles juxtaposées, destinés à bloquer ladite armature en position sur ladite structure à protéger.

Selon encore un autre mode de réalisation avantageux desdits moyens de fixation, lesdits premiers membres comprennent une pluralité de rivets fixés à ladite structure à protéger, tandis que lesdits deuxièmes membres comprennent une pluralité de boutonnières ménagées sur les bords verticaux de ladite armature, et en ce que lesdits moyens d'interconnexion consistent en des renflements d'extrémité (ou têtes) ménagé(e)s chacun(e) à l'extrémité libre de chaque rivet et destiné(e)s à bloquer ladite armature en position sur ladite structure à protéger.

Outre les dispositions qui précèdent, l'invention comprend encore d'autres dispositions, qui ressortiront de la description qui va suivre.

La présente invention vise plus particulièrement les moyens de protection du type des défenses d'accostage, de structures de supports ou analogues contre les chocs, ainsi que les moyens de fixation de ces défenses auxdites structures et les ensembles constitués par les structures à protéger pourvues de moyens de protection fixés auxdites structures par les moyens de fixation conformes aux dispositions qui précèdent.

L'invention sera mieux comprise à l'aide du complément de description qui va suivre, qui se réfère aux dessins annexès dans lesquels:

la figure 1 est une vue en coupe transversale d'une structure tubulaire à protéger pourvue d'une défense d'accostage conforme à l'invention, fixée à ladite structure par des moyens de fixation également conformes à l'invention, dont

la figure 2 est une vue en coupe suivant II-II de la figure 1;

la figure 3 est une vue en coupe transversale correspondant à celle de la figure 1, faisant apparaître un autre mode de réalisation des moyens de fixation;

la figure 4 est une vue des moyens de fixation de la figure 3, vus suivant la flèche A de la figure 3;

la figure 5 est une vue en coupe suivant V-V de la figure 4;

les figures 6 à 8 sont des vues analogues aux figures 3 à 5, d'un autre mode de réalisation des moyens de fixation;

les figures 9 à 11 sont des vues analogues aux figures 3 à 5, d'un autre mode de réalisation des moyens de fixation;

les figures 12 à 14 sont des vues analogues aux figures 3 à 5, d'un autre mode de réalisation des moyens de fixation; et

les figures 15 à 17 sont des vues analogues aux figures 3 à 5, d'un autre mode de réalisation des moyens de fixation.

L'invention sera décrite de façon spécifique en liaison avec un pylône - ou jambe - de plateforme de forage off-shore; l'on comprendra cependant aisément que l'invention n'est pas limitée à la protection de tels pylônes et que ses applications s'étendent à la protection de toutes structures sensibles aux chocs, susceptibles d'être soumises à des chocs sévères et qu'il est nécessaire de pourvoir de protections efficaces assurant une répartition uniforme des contraintes sur la structure à protéger.

Conformément à l'invention, la structure à protéger, telle que le pylône 1, par exemple, est pourvue d'une "défense" 2 en élastomère présentant une aptitude élevée à supporter les déformations les plus sévères, une résistance élevée aux contraintes, à l'abrasion et à la corrosion. La défense 2 peut présenter tout profil connu approprié, et notamment un profil en Δ, en D ou en M. Dans le cas où la défense 2 présente un profil en Δ, il est avantageux que son extrémité supérieure 3 comporte des renflements latéraux 4 qui la renforcent et empêchent la formation d'un creux sensiblement dans la zone axiale de l'extrémité 3, lorsque la défense est soumise à une force d'écrasement due à un choc. La défense 2 est fixée sur une armature métallique 5 par des moyens physico-chimiques appropriés, et notamment par vulcanisation à chaud; l'armature 5 est galbée de telle manière que son galbe épouse la portion de circonférence du pylône 1 à laquelle l'armature 5 est associée, ce qui signifie que le rayon de l'armature est le même que le rayon du pylône.

Le galbe de l'armature est choisi en fonction du rayon de la structure tubulaire à protéger, ce qui permet d'adapter une armature galbée de rayon approprié correspondant au rayon de la structure à protéger, conformément aux besoins.

La fixation de la défense 2 à une armature galbée épousant la portion de circonférence que la défense est appelée à protéger, a pour conséquence de répartir uniformément les efforts sur la structure à protéger; de plus, un ensemble défense-armature épousant étroitement la portion de circonférence à protéger, du fait du galbe de l'armature, et ne comportant pas de platine de fixation, conformément à la présente invention, n'oppose qu'une résistance relativement faible à l'écoulement de l'eau environnante, dans l'exemple d'application considéré, réduisant ainsi considérablement les efforts auxquels sont soumises tant la défense que la structure à protéger.

La défense 2 est montée sur le pylône 1 à protéger, par l'intermédiaire de l'armature 5, sans devoir recourir à des écrous et à des boulons de fixation qui subissent une usure rapide. Les moyens de fixation de l'armature 5 sur le pylône 1 proposés conformément à la présente invention sont tels qu'ils permettent la mise en place rapide et relativement aisée de la défense 2 sur le pylône 1 et son remplacement tout aussi rapide et aisé en cas de besoin.

Selon des modes de réalisation préférés de ces moyens de fixation, le montage de l'armature 5 porteuse de la défense 2 sur le pylône 1 est réalisé par simple coulissement, de même que son démontage.

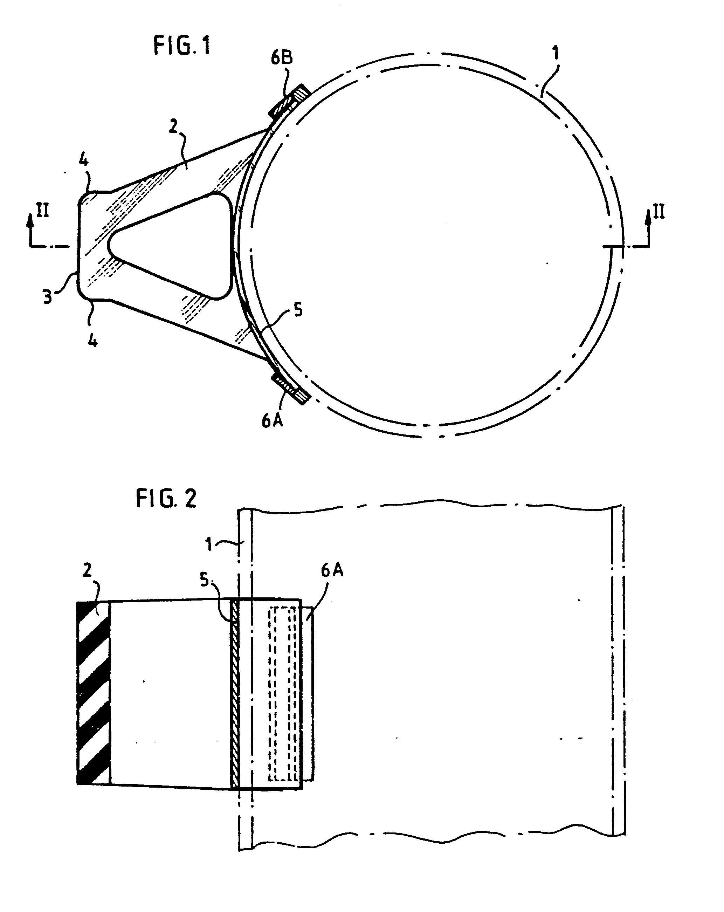

De façon plus spécifique, les moyens de fixation représentés aux figures 1 et 2 sont constitués par deux cornières 6A et 6B fixées par soudage sur le pylône 1 en correspondance des deux bords latéraux opposés de l'armature 5, dans lesquelles sont introduits par coulissement lesdits bords latéraux et dans lesquelles ces bords sont maintenus par coincement ou clipsage.

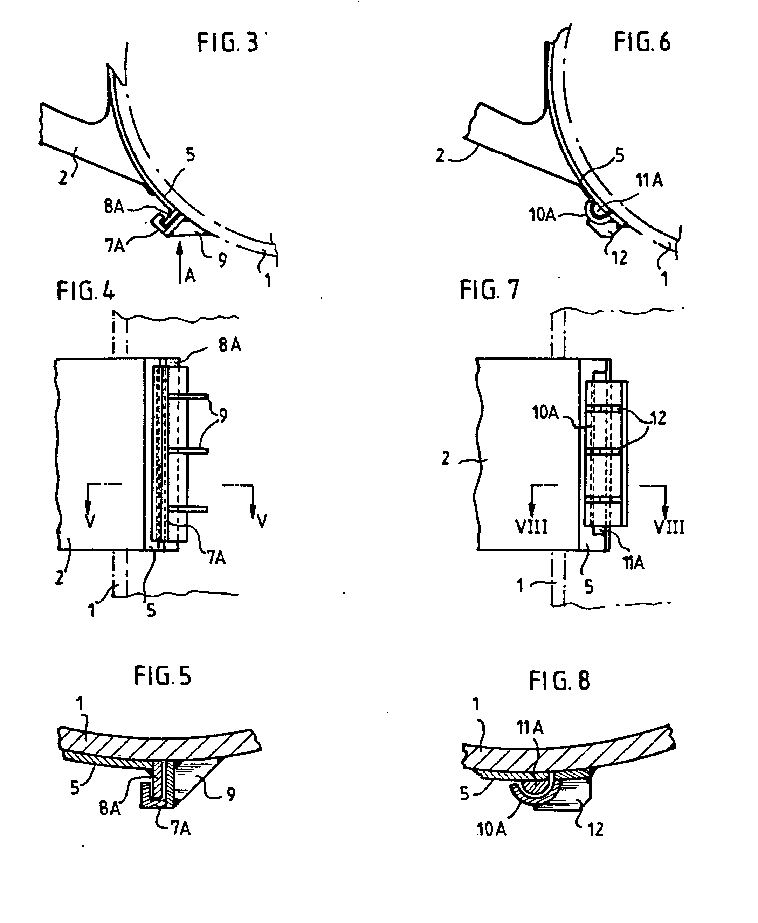

Selon le mode de réalisation représenté aux figures 3 à 5, les moyens de fixation de la défense 2 au pylône 1 comprennent des premières cornières 7A, 7B fixées par soudage au pylône 1 et des deuxièmes cornières 8A, 8B soudées aux bords latéraux de l'armature 5, qui viennent s'insérer dans les cornières 7A, 7B pour bloquer la défense 2 en position sur le pylône 1; le profil des cornières 8A, 8B peut être tel que celui représenté aux figures 3 à 5, ou être semblable au profil des cornières 7A, 7B. Les cornières 7A, 7B sont avantageusement renforcées au moyen des goussets 9.

Dans le mode de réalisation représenté aux figures 6 à 8, les moyens de fixation de la défense 2 au pylône 1 comprennent des demi-tubes 10A, 10B, soudés au pylône 1 et des demi-ronds 11A, 11B soudés aux bords latéraux de l'armature 5, qui viennent s'insérer dans les demi-tubes 10A, 10B pour bloquer la défense 2 en position sur le pylône 1; les demi-tubes 10A, 10B sont avantageusement renforcés par les raidisseurs 12.

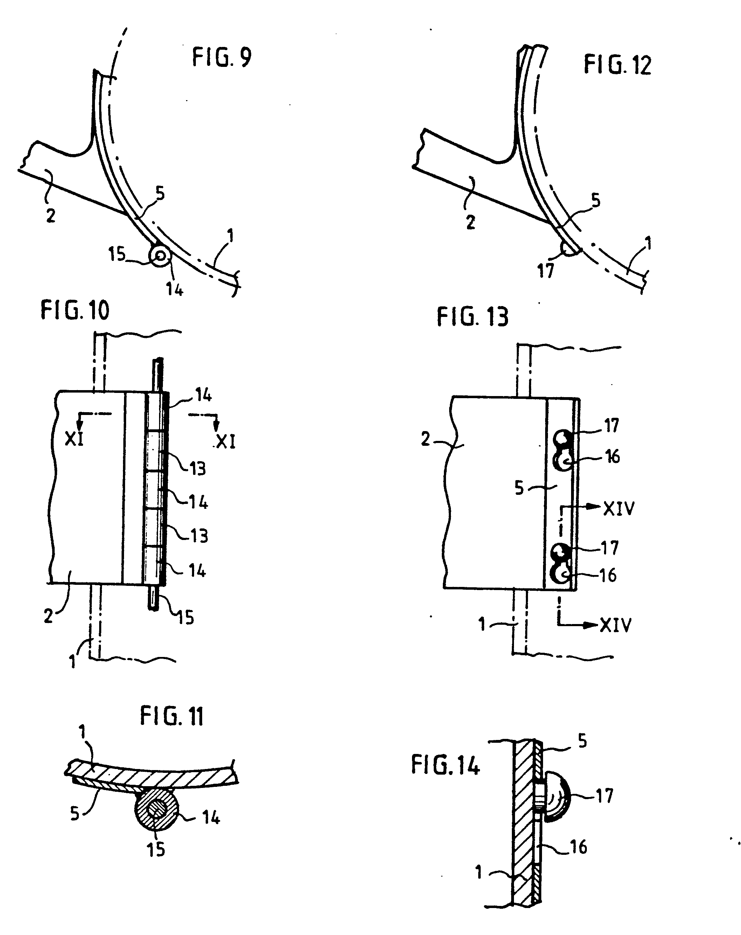

Dans le mode de réalisation représenté aux figures 9 à 11, les moyens de fixation de la défense 2 au pylône 1 comprennent des tubes 13 soudés au pylone 1 et des tubes 14 soudés aux bords latéraux de l'armature 5, qui s'intercalent en juxtaposition les une par rapport aux autres lors du montage de l'armature 5 porteuse de la défense 2, sur le pylône 1, à la manière de charnières et sont bloqués en position par un axe 15.

Selon le mode de réalisation représenté aux figures 12 à 14, les moyens de fixation comprennent des boutonnières 16 ménagées sur les bords latéraux opposés de l'armature 5, dans lesquelles viennent s'insérer des rivets à tête 17 solidarisés avec le pylône 1, ces moyens de fixation permettant un déplacement relatif vertical de la défense 2 dans les limites assignées par les boutonnières 16.

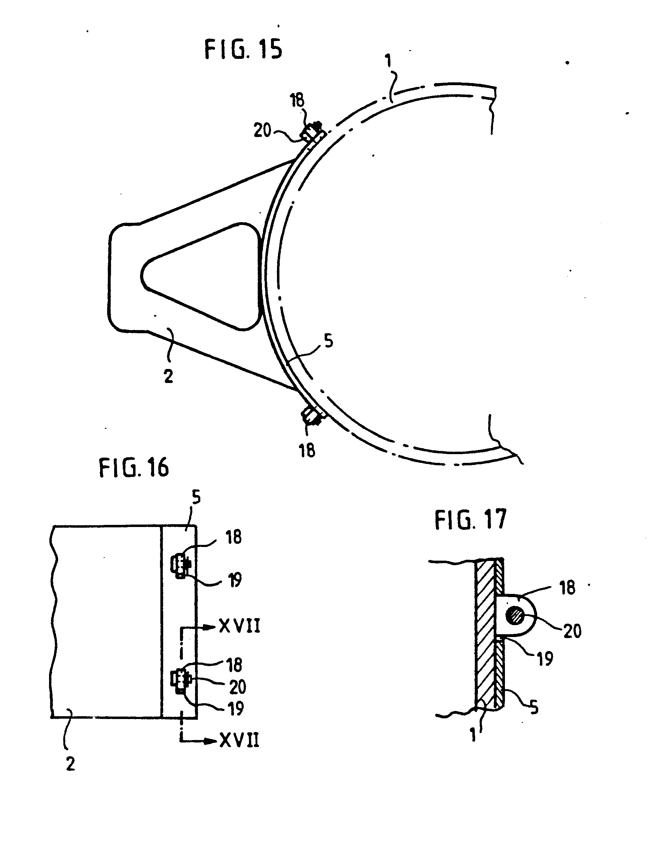

Selon le mode de réalisation représenté aux figures 15 à 17, les moyens de fixation comprennent des oreilles 18 soudées au pylône 1 et des orifices 19 de forme correspondante ménagés dans les bords latéraux de l'armature 5, dans lesquelles viennent s'insérer les oreilles 18 susdites, la solidarisation de l'armature 5 avec le pylône 1 étant réalisée au moyen de rivets, goupilles ou axes 20 insérés dans les orifices 19 en ligne avec les oreilles 18.

Selon un autre mode de réalisation, non représenté, les moyens de fixation de la défense 2 au pylone 1 comprennent des oreilles soudées au pylône 1, en regard d'orifices ménagés sur les bords latéraux de l'armature 5, solidarisés entre eux au moyen de rivets, goupilles ou axes.

Les moyens de fixation qui viennent d'être décrits dans ce qui précède permettent un montage aisé des défenses sur les structures tubulaires à protéger et un démontage tout aussi aisé dans le cas où il est nécessaire de procéder au remplacement des défenses.

Cependant les moyens de fixation qui viennent d'être décrits ne constituent que des exemples de réalisation non limitatifs, d'autres moyens de fixation équivalents pouvant être envisagés dans le cadre de la présente invention tel que défine par les revendications.

Bien que la défense représentée aux dessins soit une défense à profil sensiblement en forme de Δ, l'on comprendra aisément que l'utilisation de défenses présentant tout autre profil approprié entre dans le cadre de l'invention, et notamment l'utilisation de défenses a profil en D ou en M, comme indiqué plus haut ou l'utilisation de défenses à profil en V inversé ou à profil semi-cylindrique, dans la mesure où ces défenses sont fixées, conformément à la présente invention, à des armatures galbées, exactement adaptées à la forme de la structure à protéger.

L'agencement de défenses fixées à des armatures galbées épousant étroitement la forme de la structure à protéger, lesdites armatures permettant une fixation sûre, sans platines ni boulons, aux pylônes ou analogues, permet de réduire considérablement la surface des pylônes ou analogues directement exposée aux impacts des vagues, par rapport aux modes de fixation par platines et boulons, la surface verticale exposée étant environ quatre fois moindre dans le cas de l'agencement conforme à l'invention.

Bien que l'invention ait été décrite dans ce qui précède dans le cadre de la protection de pylônes de plateformes de forage off-shore, l'on comprendra aisément qu'elle s'applique à la protection de toutes structures de support fixes ou flottantes telles que pylônes, risers, docks, plateformes, barges de forage, installations portuaires, pieux battus dans la mer pour permettre l'accostage, piliers de ponts, pylônes électriques, pylônes de téléphériques, etc... et notamment à la protection de toutes structures sensibles aux chocs ou aux collisions, ou placées dans des milieux liquides présentant des variations de niveau importantes et/ou exposant lesdites structures à des efforts considérables, étant noté qu'elle convient tout particulièrement à la protection de structures cylindriques ou circulaires.

**Revendications**

1. Moyen de protection, du type des défenses d'accostage, pour des structures galbées de support ou analogues contre les chocs appliqués à ces dernières, comprenant en combinaison une armature galbée (5) s'adaptant à la courbure de la structure (1) à protéger, un élément amortisseur (2) en caoutchouc à profil approprié propre à absorber les chocs et adhérisé à ladite armature, et des moyens de fixation à la structure à protéger, lequel moyen de protection est caractérisé en ce que:
- ladite armature galbée (5) est continue, de façon à permettre, par coopération avec ledit élément amortisseur, une répartition uniforme des chocs sur la structure à protéger,
- les moyens de fixation sont détachables, de façon à permettre un remplacement facile et rapide des moyens de protection lorsque l'élément amortisseur devient excessivement usé,
- lesquels moyens de fixation détachables comprennent:
· des premiers et des deuxièmes membres fixés à ladite structure à protéger et à ladite armature, respectivement, et
· des moyens d'interconnexion entre lesdits premiers et deuxièmes membres permettant à ces derniers de coopérer entre eux comme moyens de fixation, à savoir de bloquer ladite armature en position par rapport à ladite structure à protéger.

2. Moyen de protection selon la revendication 1, caractérisé en ce que lesdits premiers et deuxièmes membres comprennent des premiers et des deuxièmes tubes alignés, dont les premiers tubes (13) sont reliés à la structure à protéger (1), tandis que les deuxièmes tubes (14) sont reliés à l'armature (5), et en ce que lesdits moyens d'interconnexion consistent en un axe de blocage (15) disposé à l'intérieur desdits premiers et deuxièmes tubes alignés (13, 14).

3. Moyen de protection selon la revendication 1, caractérisé en ce que lesdits premiers membres comprennent au moins une portion de tube (10A) fixée à la structure à protéger (1), tandis que lesdits deuxièmes membres comprennent au moins un demi-rond (11A) fixé à l'armature (5), et en ce que lesdits moyens d'interconnexion sont constitués par ce même demi-rond (11A) qui est disposé à l'intérieur de ladite portion de tube (10A) pour bloquer ladite armature (5) en position sur ladite structure à protéger (1).

4. Moyen de protection selon la revendication 1, caractérisé en ce que lesdits premiers membres comprennent une pluralité d'oreilles verticales percées (18) solidaires de ladite structure à protéger (1), tandis que lesdits deuxièmes membres comprennent une pluralité d'orifices (19) ménagés dans ladite armature (5) et dans lesquels lesdites oreilles sont destinées à être positionnées, et en ce que lesdits moyens d'interconnexion comprennent une pluralité de rivets ou goupilles ou analogues (20) qui sont disposés dans lesdites oreilles percées (18) et sont destinés à bloquer ladite armature (5) en position sur ladite structure à protéger (1).

5. Moyen de protection selon la revendication 1, caractérisé en ce que lesdits premiers et deuxièmes membres comprennent des premières et des deuxièmes oreilles percées juxtaposées deux à deux, dont les premières oreilles sont fixées à ladite structure à protéger, tandis que les deuxièmes oreilles sont fixées à ladite armature, et en ce que lesdits moyens d'interconnexion consistent en une pluralité d'axes de blocage, dont chacun est disposé dans chaque paire d'oreilles juxtaposées, destinés à bloquer ladite armature en position sur ladite structure à protéger.

6. Moyen de protection selon la revendication 1, caractérisé en ce que lesdits premiers membres comprennent une pluralité de rivets (17) fixés à ladite structure à protéger (1), tandis que lesdits deuxièmes membres comprennent une pluralité de boutonnières (16) ménagées sur les bords verticaux de ladite armature (5), et en ce que lesdits moyens d'interconnexion consistent en des renflements d'extrémité (ou têtes) ménagé(e)s chacun(e) à l'extrémité libre de chaque rivet (17) et destiné(e)s à bloquer ladite armature (5) en position sur ladite structure à protéger (1).

**Patentansprüche**

1. Mittel zum Schützen, und zwar vom Typ des Ankopplungsschutzes, für ausgebauchte Unterstützungsstrukturen o. dgl. gegen die Stöße, die auf letzterer ausgeübt werden, umfassend in Kombination eine ausgebauchte Armatur (5), die sich der Krümmung der zu schützenden Struktur (1) anpaßt, ein Dämpfungselement (2) aus Kautschuk von passendem Profil, das dazu geeignet ist, die Stöße zu absorbieren und das an die erwähnte Armatur angeklebt ist, und Mittel zum Befestigen an der zu schützenden Struktur, wobei dieses Mittel zum Schützen dadurch <u>gekennzeichnet</u> ist, daß:

- die ausgebauchte Armatur (5) durchgehend ist, und zwar in der Weise, daß sie durch Zusammenwirken mit dem Dämpfungselement eine gleichförmige Verteilung von Stößen auf die zu schützende Struktur gestattet,

- die Mittel zum Befestigen lösbar sind, und zwar in der Weise, daß sie ein leichtes und schnelles Ersetzen der Mittel zum Schützen ermöglichen, wenn das Dämpfungselement übermäßig abgenutzt wird,

- wobei die lösbaren Mittel zum Befestigen folgendes umfassen:

· erste und zweite Teile, die an der schützenden Struktur bzw. an der Armatur befestigt sind, und

· Mittel zur Miteinanderverbindung zwischen den ersten und zweiten Teilen, die es diesen letzteren ermöglichen, untereinander wie Mittel zur Befestigung zusammenzuwirken, d. h. die Armatur in Position bezüglich der zu schützenden Struktur zu blockieren.

2. Mittel zum Schützen gemäß Anspruch 1, dadurch <u>gekennzeichnet,</u> daß die ersten und zweiten Teile erste und zweite fluchtende Rohre umfassen, von denen die ersten Rohre (13) mit der zu schützenden Struktur (1) verbunden sind, während die zweiten Rohre (14) mit der Armatur (5) verbunden sind, und daß die Mittel zur Miteinanderverbindung aus einer Blockierungsachse (15) bestehen, die im Inneren der ersten und zweiten fluchtenden Rohre (13, 14) angeordnet ist.

3. Mittel zum Schützen nach Anspruch 1, dadurch <u>gekennzeichnet,</u> daß die ersten Teile wenigstens einen Teil eines Rohrs (10A) umfassen, der an der zu schützenden Struktur (1) befestigt ist, während die zweiten Teile wenigstens ein Halbrund (11A) umfassen, das an der Armatur (5) befestigt ist, und daß die Mittel zur Miteinanderverbindung von diesem gleichen Halbrund (11A) gebildet sind, dasin dem Inneren des Teils des Rohrs (10A) zum Blockieren der Armatur (5) in Position auf der zu schützenden Struktur (1) angeordnet ist.

4. Mittel zum Schützen nach Anspruch 1, dadurch <u>gekennzeichnet,</u> daß die ersten Teile eine Mehrzahl von vertikalen durchlöcherten Ösen (18) umfassen, die mit der zu schützenden Struktur (1) fest verbunden sind, während die zweiten Teile eine Mehrzahl von Öffnungen (19) umfassen, die in der Armatur (5) ausgespart und dazu bestimmt sind, daß darin die Ösen positioniert werden, und daß die Mittel zur Miteinanderverbindung eine Mehrzahl von Nieten oder Vorsteckstiften o. dgl. umfassen, die in den durchlöcherten Ösen (18) angeordnet und dazu bestimmt sind, die Armatur (5) in Position auf der zu schützenden Struktur (1) zu blockieren.

5. Mittel zum Schützen nach Anspruch 1, dadurch <u>gekennzeichnet,</u> daß die ersten und zweiten Teile erste und zweite durchlöcherte Ösen umfassen, die paarweise nebeneinander liegend sind, wobei die ersten Ösen an der zu schützenden Struktur befestigt sind, während die zweiten Ösen an der Armatur befestigt sind, und daß die Mittel zur Miteinanderverbindung aus einer Mehrzahl von Blockierungsachsen bestehen, von denen je eine in jedem nebeneinanderliegenden Ösenpaar angeordnet ist, und dazu bestimmt, die Armatur in Position auf der zu schützenden Struktur zu blockieren.

6. Mittel zum Schützen nach Anspruch 1, dadurch <u>gekennzeichnet,</u> daß die ersten Teile eine Mehrzahl von Nieten (17) umfassen, die an der zu schützenden Struktur (1) befestigt sind, während die zweiten Teile eine Mehrzahl von länglichen Aussparungen (16) umfassen, die auf den vertikalen Rändern der Armatur (5) ausgespart sind, und daß die Mittel zur Miteinanderverbindung aus Endverdickungen (oder Köpfen) bestehen, von denen jede bzw. jeder am freien Ende von jedem Niet (17) angebracht ist und die dazu bestimmt sind, die Armatur (5) in Position auf der zu schützenden Struktur (1) zu blockieren.

**Claims**

1. A protection means of the approach fenders type, for protecting curved support structures or similar against the shocks applied thereto,

comprising in combination a curved framework (5) mating with the curvature of the structure (1) to be protected, a rubber shock absorbing element (2) with an appropriate profile adapted for absorbing the shocks and adhered to said framework and means for fixing to the structurs to be protected, which protection means is characterized in that:

- said curved framework (5) is continuous so as to provide, by cooperation with said shock absorbing element, a uniform distribution of the shocks over the structure to be protected,

- the fixing means are detachable so as to allow ready and rapid replacement of the detection means when the shock absorbing element becomes excessively worn,

- which detachable fixing means include:

· first and second members fixed to said structure to be protected and to said framework, respectively, and

· interconnection means between said first and second members allowing these latter to cooperate together as fixing means, namely to lock said framework in position with respect to said structure to be protected.

2. Protection means according to claim 1, characterized in that said first and second members include first and second aligned tubes, the first tubes (13) of which are connected to the structure to be protected (1), whereas the second tubes (14) are connected to the framework (5), and in that said interconnection means consist of a locking shaft disposed inside said first and second aligned tubes (13, 14).

3. Protection means according to claim 1, characterized in that said first members comprise at least one tube portion (10A) fixed to the structure to be protected (1), whereas said second members comprise at least one half round member (11A) fixed to the framework (5), and in that said interconnection means are formed by this same half round member (11A) which is disposed inside said tube portion (10A) for locking said framework (5) in position on said structure to be protected (1).

4. Detection means according to claim 1, characterized in that said first members include a plurality of pierced vertical lugs (18) integral with said structure to be protected (1), whereas said second members comprise a plurality of orifices (19) formed in said framework (5) and in which said lugs are intended to be positioned, and in that said interconnection means comprise a plurality of rivets or pins or similar (20) which are disposed in said pierced lugs (18) and are intended to lock said framework (5) in position on said structure to be protected (1).

5. Protection means according to claim 1, characterized in that said first and second members comprise first and second pierced lugs juxtaposed two by two, the first lugs of which are fixed to said structure to be protected whereas the second lugs are fixed to said framework and in that said interconnection means consist of the plurality of locking shafts, each of which is disposed in each pair of juxtaposed lugs, for locking said framework in position on said structure·to be protected.

6. Protection means according to claim 1, characterized in that said first members comprise a plurality of rivets (17) fixed to said structure to be protected (1) whereas said second members comprise a plurality of buttonholes (16) formed in the vertical edges of said framework (5) and in that said interconnection means consist of end swellings (or heads) each formed at the free ed of each rivet (17) and intended to lock said framework (5) in position on said structure to be protected (1).

FIG. 1

FIG. 2

FIG. 3

FIG. 6

FIG. 4

FIG. 7

FIG. 5

FIG. 8

FIG. 9

FIG. 12

FIG. 10

FIG. 13

FIG. 11

FIG. 14

## FIG. 15

1

18
20

2

5

18

## FIG. 16

5

18

19

→ XVII

18
20
19

2

→ XVII

## FIG. 17

18

20

19

5

1